# EUROPEAN PATENT SPECIFICATION

(11) **EP 4 499 763 B1**
(45) Date of publication and mention of the grant of the patent: **19.08.2026**
(21) Application number: 23720197.5
(22) Date of filing: 27.03.2023
(51) Int. Cl.: C09D 183/04

(54) **ADHESION OF SILICONE RUBBER**
HAFTUNG VON SILIKONKAUTSCHUK
ADHÉRENCE DE CAOUTCHOUC DE SILICONE

(30) Priority: 29.03.2022 US 202263324670 P
(43) Date of publication of application: 05.02.2025
(73) Proprietor: Dow Silicones Corporation, Midland, MI 48686-0994 (US)
(72) Inventor: GEYER, Florian, 65201 Wiesbaden (DE); BACKER, Michael, 65201 Wiesbaden (DE)
(74) Representative: Murgitroyd & Company
(86) International application number: PCT/US2023/016350
(87) International publication number: WO 2023/192144

(56) References cited:
- US-A- 5 985 371
- GRARD A ET AL: "Effect of surface morphology on the adhesion of silicone elastomers on AA6061 aluminum alloy", INTERNATIONAL JOURNAL OF ADHESION AND ADHESIVES, ELSEVIER, AMSTERDAM, NL, vol. 102, 20 June 2020 (2020-06-20), XP086245226, ISSN: 0143-7496, [retrieved on 20200620], DOI: 10.1016/J.IJADHADH.2020.102656

## Description

The present disclosure relates to a method of adhering silicone elastomers made from hydrosilylation curable silicone rubber compositions to an inorganic substrate using a suitable adhesion mediator, the use of the adhesion mediator for same and in relation to composite materials comprising inorganic substrates adhered to silicone elastomers using the aforementioned adhesion mediator composition.

Hydrosilylation curable silicone rubber compositions cure to provide silicone elastomeric materials (otherwise referred to as silicone rubbers) via a hydrosilylation (addition) cure process.

Silicone elastomers which result from curing said hydrosilylation curable silicone rubber compositions may be used in a wide variety of applications including, for the sake of example, in electrical supply e.g., high-voltage electrical insulation, electronics, automotive applications, and consumer applications including e.g., food contact applications, because they have highly reliable properties.

In many such applications it has become increasingly desirable to manufacture molded composite parts comprising silicone elastomers and other materials such as inorganic materials e.g., metals, metal alloys, glass and ceramics. However, the preparation of such composites has proven difficult because of the lack of adhesion between silicone elastomers and many of the inorganic materials which would be used as substrates, particularly if the inorganic material is substantially non-reactive towards the silicone elastomers or vice versa. Consequently, the ability to provide composites of silicone elastomer materials with said inorganic substrates has been limited due to the inability to form sufficiently strong adhesive bonds between the two.

The application of primers onto substrate surfaces, with or without prior activation of the substrate, was initially utilised to overcome this lack of adhesion issue. A primer is a preparatory coating applied on to a substrate and is then dried and/or cured to provide improved adhesion between the substrate and in this case a hydrosilylation curable silicone rubber composition subsequently applied thereon. Primers cannot always build up adhesion with said inorganic substrates unless cleaned and/or activated using e.g., solvents, ultrasonic baths and/or special treatments like flame, corona or plasma treatments. Usually, the primer is applied onto the substrate surface to a suitable thickness of from less than 10 µm up to 1 mm depending on the nature of the primer. After application and solvent evaporation at room or elevated temperatures, many primers are required to pre-cure at temperatures between 60 to 130 °C for 20 to 120 minutes. However, several problems have arisen using methods requiring primers. The use of primers for composite parts/articles are generally not preferred because they can be unreliable, can have quality control and reliability issues and traditionally contain high proportions of organic solvents which evaporate during the drying/curing process often resulting in undesirable volatile organic compound (VOC) environmental issues. US5985371describes a primer composition comprising (I) an organoalkoxysilane or siloxane, (II) an organohydrogensiloxane having an SiH group and an alkoxysilyl group, and (III) an organic titanate.

It also describes a primer composition comprising (A) an alkenyl-containing organopolysiloxane, (B) an organopolysiloxane, (C) an organoalkoxysilane or siloxane, (D) an organohydrogensiloxane having an SiH group and an alkoxysilyl group, (E) a platinum catalyst, (F) an organic titanate, and (G) an organic peroxide.

The use of such primers has proven particularly problematic with respect to the preparation of composite parts/articles for use in highly regulated applications such as skin contact and food contact applications.

Composite parts/articles made from one or more inorganic substrates and one or more silicone elastomers are often prepared by way of injection molding processes including overmolding (e.g., injection molding hydrosilylation curable silicone rubber compositions over an inorganic substrate) or 2K injection molding processes used when referring to molding both the inorganic substrate and the hydrosilylation curable silicone rubber compositions into one composite silicone elastomer/inorganic substrate article or part by using a 2K injection molding machine. Historically this has prevented the vast majority of primers from being utilised because of their ingredients, especially volatile organic solvents.

The aim of the present disclosure is to provide a method for adhering a silicone elastomer to an inorganic substrate using a suitable adhesion mediator composition.

The present disclosure relates to a method for the preparation of a composite of silicone elastomer and an inorganic substrate, comprising the steps of
(a) optionally cleaning and/or activating an inorganic substrate surface;
(b) treating the optionally cleaned and/or activated inorganic substrate surface with an adhesion mediator composition;
(c) applying a hydrosilylation curable silicone rubber composition on to a treated surface resulting from step (b);
(d) curing said hydrosilylation curable silicone rubber composition,
characterised in that the adhesion mediator composition comprises:
(i) a trialkoxysilane, of the formula Si(OR)₃R¹ wherein each R may be the same or different and is an alkyl group having at least two carbons per group and each R¹ may be the same or different and is an unsaturated group selected from an alkenyl group or an alkynyl group; which trialkoxysilane is present in an amount of from 20 to 45 wt. % of the adhesion mediator composition;
(ii) a platinum group metal based hydrosilylation reaction catalyst in which platinum group metal is present in an amount of from 0.1-1.5 wt. % of the adhesion mediator composition;
(iii) an alkoxy titanium compound having from 2 to 4 alkoxy groups in an amount of from 1 to 10 wt. % of the adhesion mediator composition;
(iv) a tetraalkoxysilane of the formula Si(OR²)₄, wherein each R² may be the same or different and is an alkyl group having at least two carbons per group, which tetraalkoxysilane is present in an amount of from 5 to 20 wt. % of the adhesion mediator composition; and
(v) either
   (a') a polyorganosiloxane containing at least two unsaturated groups, selected from alkenyl groups and alkynyl groups, per molecule and having a viscosity in a range of 50 mPa.s to 9000 mPa.s using a Brookfield^{™} viscometer with an RV-4 Spindle at 20 rpm at 25°C; or
   (b') a mixture of two or more polyorganosiloxanes containing at least two unsaturated groups, selected from alkenyl groups and alkynyl groups, per molecule, which mixture has a viscosity in a range of 50 mPa.s to 9000 mPa.s using a Brookfield^{™} viscometer with an RV-4 Spindle at 20 rpm at 25°C;
wherein component (v) is present in an amount of from 25 to 60 wt. % of the adhesion mediator composition.

The total weight % (wt. %) of the adhesion mediator composition used in this method in any combination is 100 wt. %. There was no need to wait for the adhesion mediator layer to dry or cure, indeed it is preferred for the hydrosilylation curable silicone rubber composition to be applied before the adhesion mediator layer cures or solidifies. There is also provided a use of an adhesion mediator composition as hereinbefore described in the preparation of a silicone elastomer and inorganic composite.

There is also provided a composite part or article obtained or obtainable from a method as claimed herein. There is also provided a composite part or article obtained or obtainable from a method as claimed herein for the preparation of a composite of silicone elastomer and an inorganic substrate as described herein.

There is also provided a use of a composite article or part as claimed herein wherein the silicone elastomer and inorganic composite is used in transportation, packaging, storage, treatment, production, preparation, processing and consumption applications and/or in the molding of household products and/or food and drink products for human consumption.

There is also provided a use of an adhesion mediator composition comprising
(i) a trialkoxysilane, of the formula Si(OR)₃R¹ wherein each R may be the same or different and is an alkyl group having at least two carbons per group and each R¹ may be the same or different and is an unsaturated group selected from an alkenyl group or an alkynyl group; which trialkoxysilane is present in an amount of from 20 to 45 wt. % of the adhesion mediator composition;
(ii) a platinum group metal based hydrosilylation reaction catalyst in which platinum group metal is present in an amount of from 0.1-1.5 wt. % of the adhesion mediator composition;
(iii) an alkoxy titanium compound having from 2 to 4 alkoxy groups in an amount of from 1 to 10 wt. % of the adhesion mediator composition;
(iv) a tetraalkoxysilane of the formula Si(OR²)₄, wherein each R² may be the same or different and is an alkyl group having at least two carbons per group, which tetraalkoxysilane in an amount of from 5 to 20 wt. % of the adhesion mediator composition; and
(v) either
   (a') a polyorganosiloxane containing at least two unsaturated groups, selected from alkenyl groups and alkynyl groups, per molecule and having a viscosity in a range of 50 mPa.s to 9000 mPa.s using a Brookfield^{™} viscometer with an RV-4 Spindle at 20 rpm at 25°C; or
   (b') a mixture of two or more polyorganosiloxanes containing at least two unsaturated groups, selected from alkenyl groups and alkynyl groups, per molecule, which mixture has a viscosity in a range of 50 mPa.s to 9000 mPa.s using a Brookfield^{™} viscometer with an RV-4 Spindle at 20 rpm at 25°C;
   wherein component (v) is present in an amount of from 25 to 60 wt. % of the adhesion mediator composition;
in a method for the preparation of a composite of silicone elastomer and an inorganic substrate as claimed herein.

There is also provided a use of an adhesion mediator composition as claimed herein wherein the silicone elastomer and inorganic composite is used in the transport, packaging, storage, treatment, production, preparation, processing, consumption, and molding of household products and/or food and drink products for human consumption.

Advantageously, the method for adhering a silicone elastomer to an inorganic substrate using the adhesion mediator composition described above, allows for immediate over-molding and is not reliant on a primer pre-cure treatment or evaporation of solvents i.e., it is designed to have no major volatile organic compounds (VOC) such as organic solvents involved.

Any suitable inorganic substrate may be utilised. In one embodiment the inorganic substrate is selected from a metal, such as aluminium, steel, copper, zinc and alloys thereof, such as brass, glass, ceramic materials, such as silicon oxide, aluminum oxide, zirconium dioxide, aluminum silicates, cerium oxide, and composites thereof. When the inorganic substrate is glass, the glass substrate onto which the composition is applied may be virtually any glass substrate for example, borosilicate glass, soda lime glass, silica glass, alkali barium glass, aluminosilicate glass, lead glass, phosphate glass, alkali borosilicate glass, xena glass and/or fluorosilicate glass. The substrate may alternatively be a pre-treated glass, for example, vacuum-deposited reflective metallic-coated plate glass which may be used in e.g., commercial building and architectural spandrel applications.

In the process described herein there are four steps:
(a) optionally cleaning and/or activating an inorganic substrate surface;
(b) treating the optionally cleaned and/or activated inorganic substrate surface with the adhesion mediator composition;
(c) applying a hydrosilylation curable silicone rubber composition on to a treated surface resulting from step (b);
(d) curing said hydrosilylation curable silicone rubber composition.

### Step (a)

As previously indicated step (a) of the process described herein, i.e., cleaning and/or activating an inorganic substrate surface, is optional. If desired the cleaning and/or activation step may be undertaken by, for the sake of example, plasma treatment, corona discharge treatment, UV-C/ozone or Vacuum-UV irradiation, flame-pyrolytic deposition of amorphous silicon dioxide, or flame treatment.

The term "plasma" covers a huge range of systems whose density and temperature vary by many orders of magnitude. Some plasmas are very hot and all their microscopic species (ions, electrons, etc.) are in approximate thermal equilibrium, the energy input into the system being widely distributed through atomic/molecular level collisions. Other plasmas, however, particular those utilised at room temperature and pressure or under vacuum, where collisions are relatively infrequent, have their constituent species at widely different temperatures and are called "non-thermal equilibrium" plasmas where free electrons are very hot with temperatures of many thousands of degrees Kelvin whilst the neutral and ionic species remain cool. Because the free electrons have almost negligible mass, the total system heat content is low and the plasma e.g., atmospheric pressure plasma discharges such as atmospheric pressure dielectric barrier discharge and atmospheric pressure glow discharge operates close to room temperature thus allowing the processing of temperature sensitive materials, such as plastics or polymers, without imposing a damaging thermal burden onto the sample. However, the hot electrons create, through high energy collisions, a rich source of radicals and excited species with a high chemical potential energy capable of profound chemical and physical reactivity and therefore are suitable for many technological applications such as in this case surface activation.

A corona discharge is an electrical discharge caused by the ionization of a fluid such as air surrounding a conductor carrying a high voltage. It represents a local region where the air (or other fluid) has undergone electrical breakdown and become conductive, allowing charge to continuously leak off the conductor into the air and may be useful for cleaning and/or activation purposes. UV-C radiation is particularly advantageously provided at a wavelength of 100 nm to 280 nm, preferably of 150 nm to 260 nm, and particularly preferably of 170 nm to 260 nm and may be used to clean and/or activate the surface of suitable inorganic substrates and improve the adhesion of silicone on the surface thereof after application of a coating of the adhesion mediator composition as hereinbefore described.

Flame-pyrolytic deposition of amorphous silicon dioxide may be undertaken by any suitable process, such as "the PYROSIL^{™} Process" of Sura Instruments GmbH of Jena Germany wherein the substrate is fed through a gas flame which is doped with a silicon-containing precursor material (PYROSIL^{™}) which precursor burns in the flame and deposits on the surface in a very thin but dense and firmly adhering silicon oxide coating (5 - 100 nm).

In the case of each radiation cleaning and/or activation process used, said radiation is preferably produced by means of a suitable radiation source, with the radiation source being moved over the surface of the inorganic substrate during the irradiation. Alternatively, the radiation source may be stationary manner and/or e.g., the substrate may be moved relative thereto.

The irradiation of the surface of the inorganic substrate material by means of UV-C radiation is further advantageously carried out while forming ozone, with the ozone interacting with the surface during the irradiation. It has been found on the irradiation of inorganic materials with UV-C radiation that ozone is formed by the interaction with the air atmosphere, with the ozone in turn producing a substantial improvement in the activation of the surface in interaction with the surface of the inorganic material. The ozone formed is consequently additionally used to produce the improvement of the adhesion of silicone on the surface of the inorganic material.

If the irradiation is carried out within a closed space, in particular within an irradiation chamber darkened to the outside, the advantage is in particular achieved in conjunction with the ozone that the ozone remains in the region of the inorganic substrate close to the surface and can enter into corresponding interaction with the surface. Provision can additionally be made for the amplification of this effect to correspondingly optimize the irradiation chamber to ensure an interaction of the ozone with the surface that is as intense as possible. The irradiation chamber is, for example, selected as so small in size that a concentration of the ozone above the surface of the inorganic substrate is present that is as high as possible.

The duration of the irradiation may be, for example, from 0.1 seconds up to fifteen minutes; alternatively, from 0.1 seconds up to ten minutes; alternatively, from three seconds up to seven minutes; alternatively, from three seconds up to five minutes; alternatively, from 0.1 seconds up to one minute; alternatively, from 0.4 seconds to 30 seconds.

For the present cleaning and/or activation step, UV-C or particularly corona discharge are the preferred methods for step (a) of the process, particularly with respect to metals as they can oxidise the surface of the substrates such as metals described herein.

### Step (b)

Upon completion of the step (a) cleaning and/or activation, when required, a layer of the aforementioned adhesion mediator composition is applied onto the inorganic substrate surface in accordance with step (b). Any suitable method may be used, i.e., by spraying, brushing, rolling, flooding and squeegeeing, application with a knife coater or by wiping or transfer printing with a sponge or stamping or the like or the substrate may in certain circumstances be dip-coated by immersion in a bath of the adhesion mediator composition, dependent on the size and shape of the substrate. In the lab it was found that merely wiping the surface of the inorganic substrate once the adhesion mediator composition had been applied by pipette or the like was perfectly adequate. The adhesion mediator composition coating subsequent to application on the substrate, is typically in the region of 0.001 to 3 mm thick, alternatively 0.001 to 2 mm thick, alternatively 0.001 to 1 mm thick.

Step (b) of the process requires use of the adhesion mediator composition described above, the components for which are discussed below:

### Component (i)

Component (i) of the adhesion mediator composition is a trialkoxysilane, of the formula Si(OR)₃R¹ wherein each R may be the same or different and is an alkyl group having at least two carbons per group, alternatively from 2 to 20 carbons per group, alternatively from 2 to 15 carbons per group, alternatively from 2 to 10 carbons per group; alternatively, each R group may be selected from alkyl groups having 2 to 6 carbons per group such as ethyl, propyl, n-butyl, t-butyl, pentyl or hexyl; alternatively, ethyl, propyl, n-butyl isobutyl or t-butyl, alternatively ethyl or propyl and
each R¹ may be the same or different and is an unsaturated group selected from an alkenyl group or an alkynyl group, alternatively each R¹ may be the same or different and is an unsaturated group selected from an alkenyl group or an alkynyl group in either case having from 2 to 20 carbons per group, alternatively from 2 to 15 carbons per group, alternatively from 2 to 10 carbons per group; alternatively each R¹ is an alkenyl group which may be the same or different selected from vinyl, propenyl, n-butenyl, pentenyl or hexenyl.

In one embodiment component (i) the trialkoxysilane is present in an amount of from 20 to 40 wt. % of the adhesion mediator composition, alternatively from 25 wt. % to 38 wt. % of the adhesion mediator composition, alternatively from 25 wt. % to 35 wt. % of the adhesion mediator composition.

In a preferred embodiment component (i) the trialkoxysilane is a trialkoxysilane, of the formula Si(OR)₃R¹ in which each R is an alkyl group having from 2 to 4 carbons per group such as ethyl, propyl, n-butyl isobutyl or t-butyl, alternatively ethyl or propyl and each R¹ is an alkenyl group which may be the same or different which has from 2 to 6 carbons per group such as vinyl, propenyl, n-butenyl, pentenyl or hexenyl; alternatively, each R¹ is a vinyl group.

### Component (ii)

Component (ii) of the adhesion mediator composition is a platinum group metal based hydrosilylation cure catalyst. These are usually selected from catalysts of the platinum group of metals (platinum, ruthenium, osmium, rhodium, iridium and palladium), or a compound of one or more of such metals. Alternatively, platinum and rhodium compounds are preferred due to the high activity level of these catalysts in hydrosilylation reactions, with platinum compounds most preferred. In a hydrosilylation (or addition) reaction a hydrosilylation catalyst such as component (ii) herein catalyses the reaction between an unsaturated group, usually an alkenyl group e.g., vinyl with Si-H groups.

The component (ii) catalyst can be a platinum group metal, a platinum group metal deposited on a carrier, such as activated carbon, metal oxides, such as aluminum oxide or silicon dioxide, silica gel or powdered charcoal, or a compound or complex of a platinum group metal. Preferably the platinum group metal is platinum.

Examples of preferred hydrosilylation catalysts (ii) are platinum based catalysts, for example, platinum black, platinum oxide (Adams catalyst), platinum on various solid supports, chloroplatinic acids, e.g., hexachloroplatinic acid (Pt oxidation state IV) (Speier catalyst), chloroplatinic acid in solutions of alcohols e.g., isooctanol or amyl alcohol (Lamoreaux catalyst), and complexes of chloroplatinic acid with ethylenically unsaturated compounds such as olefins and organosiloxanes containing ethylenically unsaturated silicon-bonded hydrocarbon groups, e.g., tetra-vinyl-tetramethylcyclotetrasiloxane-platinum complex (Ashby catalyst). Soluble platinum compounds that can be used include, for example, the platinum-olefin complexes of the formulae (PtCl₂.(olefin)₂ and H(PtCl₃.olefin), preference being given in this context to the use of alkenes having 2 to 8 carbon atoms, such as ethylene, propylene, isomers of butene and of octene, or cycloalkanes having 5 to 7 carbon atoms, such as cyclopentene, cyclohexene, and cycloheptene. Other soluble platinum catalysts are, for the sake of example a platinum-cyclopropane complex of the formula (PtCl₂C₃H₆)₂, the reaction products of hexachloroplatinic acid with alcohols, ethers, and aldehydes or mixtures thereof, or the reaction product of hexachloroplatinic acid and/or its conversion products with vinyl-containing siloxanes such as methylvinylcyclotetrasiloxane in the presence of sodium bicarbonate in ethanolic solution -. Platinum catalysts with phosphorus, sulfur, and amine ligands can be used as well, e.g., (Ph₃P)₂PtCl₂; and complexes of platinum with vinylsiloxanes, such as sym-divinyltetramethyldisiloxane.

Hence, specific examples of suitable platinum-based catalysts include:
(i') complexes of chloroplatinic acid with organosiloxanes containing ethylenically unsaturated hydrocarbon groups are described in US 3,419,593;
(ii') chloroplatinic acid, either in hexahydrate form or anhydrous form;
(iii') a platinum-containing catalyst which is obtained by a method comprising reacting chloroplatinic acid with an aliphatically unsaturated organosilicon compound, such as divinyltetramethyldisiloxane;
(iv') alkene-platinum-silyl complexes as described in US Pat. No. 6,605,734 such as (COD)Pt(SiMeCl₂)₂ where "COD" is 1,5-cyclooctadiene; and/or
(v') Karstedt's catalyst, a platinum divinyl tetramethyl disiloxane complex typically containing about 1 wt. % of platinum typically in a vinyl siloxane polymer. Solvents such as toluene and the like organic solvents have been used historically as alternatives but the use of vinyl siloxane polymers by far the preferred choice. These are described in US3,715,334 and US3,814,730. In one preferred embodiment component (ii) may be selected from co-ordination compounds of platinum. In one embodiment hexachloroplatinic acid and its conversion products with vinyl-containing siloxanes, Karstedt's catalysts and Speier catalysts are preferred.

The catalyst may be added as a single species or as a mixture of two or more different species. Typically, dependent on the form/concentration in which the catalyst is provided the amount of platinum group metal present, alternatively the amount of platinum metal present will be within the range of from 0.1-1.5 wt. % of the composition, alternatively from 0.1-1.0 wt. %, alternatively 0.1 to 0.5 wt. %, of the composition.

### Component (iii)

Component (iii) of the adhesion mediator composition is an alkoxy titanium compound having from 2 to 4 alkoxy groups, e.g., Ti(OR³)₄, Ti(OR³)₃R⁴, Ti(OR³)₂R⁴₂ or a chelated alkoxy titanium molecule such as an ester of titanic acid and the enolate of acetoacetic ester; where R³ is a linear or branched alkyl group having from 1 to 20 carbons, alternatively 1 to 15 carbons, alternatively 1 to 10 carbons, alternatively 1 to 6 carbons. Examples of R³, include but are not restricted to methyl, ethyl, n-propyl, isopropyl, n-butyl, isobutyl, tertiary butyl, branched secondary alkyl groups such as 2, 4-dimethyl-3-pentyl. When present R⁴ is an organic group such as an alkyl group having from 1 to 10 carbon atoms, an alkenyl group having from 2 to 10 carbon atoms, an alkynyl group having from 2 to 10 carbon atoms, a cycloalkyl group having from 3 to 10 carbon atoms, or an aromatic group having from 6 to 20 carbon atoms e.g., a phenyl group or a mixture thereof. Each R⁴ may be the same or different and is selected from an alkyl group, an alkenyl group or an alkynyl group, alternatively an alkyl group, an alkenyl group, alternatively an alkyl group, in each case having up to 10 carbons, alternatively, up to 6 carbons per group. Examples of R⁴ may include but are not restricted to methyl, ethyl, propyl, butyl, vinyl, cyclohexyl, phenyl, tolyl group.

Suitable examples of component (iii) when Ti(OR³)₄, Ti(OR³)₃R⁴, or Ti(OR³)₂R⁴₂ include for the sake of example, tetra methyl titanate, tetra ethyl titanate, tetra n-propyl titanate, tetra n-butyl titanate, tetra t-butyl titanate, tetraisobutyl titanate tetraisopropyl titanate. When component (iii) is Ti(OR³)₃R⁴, examples include but are not limited to trimethoxy alkyl titanium, triethoxy alkyl titanium, tri n-propoxy alkyl titanium, tri n-butoxy alkyl titanium, tri t-butoxy alkyl titanium and tri isopropoxy alkyl titanate. When Component (iii) is a chelated titanium, it may comprise an ester of titanic acid and the enolate of acetoacetic ester.

In one embodiment component (iii) may be selected from titanates of the structure Ti(OR³)₄, Ti(OR³)₃R⁴, Ti(OR³)₂R⁴₂ where each R⁴ may be as described above and R³ is an isobutyl group or n-butyl group or component (iii) is an ester of titanic acid and the enolate of acetoacetic ester. Component (iii) of the adhesion mediator composition i.e., the alkoxy titanium compound having from 2 to 4 alkoxy groups, maybe present in an amount of from 1 to 10 wt. % of the composition, alternatively from 2 to 8 wt. %, alternatively from 2 to 7 wt. % of the composition.

### Component (iv)

Component (iv) of the adhesion mediator composition is a tetraalkoxysilane of the formula Si(OR²)₄ wherein each R² may be the same or different and is an alkyl group having at least two carbons per group, alternatively an alkyl group having from 2 to 20 carbons per group, alternatively from 2 to 15 carbons per group, alternatively from 2 to 10 carbons per group, alternatively is ethyl, propyl, isopropyl, n-butyl, isobutyl, t-butyl, pentyl or hexyl, alternatively ethyl, propyl, isopropyl, n-butyl, isobutyl, t-butyl; Component (iv) is present in the adhesion mediator composition in an amount of from 5 to 20 wt. % of the composition, alternatively from 5 to 15 wt. %, alternatively from 7 to 15 wt. %.

### Component (v)

Component (v) of the adhesion mediator composition is either:
(a') a polyorganosiloxane containing at least two unsaturated groups, selected from alkenyl groups and alkynyl groups, per molecule and having a viscosity in a range of 50 mPa.s to 9000 mPa.s using a Brookfield^{™} viscometer with an RV-4 Spindle at 20 rpm at 25°C; or
(b') a mixture of two or more polyorganosiloxanes containing at least two unsaturated groups, selected from alkenyl groups and alkynyl groups, per molecule, which mixture has a viscosity in a range of 50 mPa.s to 9000 mPa.s using a Brookfield^{™} viscometer with an RV-4 Spindle at 20 rpm at 25°C;
wherein said component (v) is present in an amount of from 25 to 60 wt. % of the composition.

In both (v)(a') the polyorganosiloxane containing at least two unsaturated groups, selected from alkenyl groups and alkynyl groups, per molecule and in (v)(b') the mixture of two or more polyorganosiloxanes containing at least two unsaturated groups, selected from alkenyl groups and alkynyl groups, per molecule, has a viscosity in a range of 50 mPa.s to 9000 mPa.s using a Brookfield^{™} viscometer with an RV-4 Spindle at 20 rpm at 25°C; alternatively a viscosity in a range of 100 mPa.s to 9000 mPa.s using a Brookfield^{™} viscometer with an RV-4 Spindle at 20 rpm at 25°C; alternatively a viscosity in a range of 100 mPa.s to 8000 mPa.s using a Brookfield^{™} viscometer with an RV-4 Spindle at 20 rpm at 25°C; alternatively a viscosity in a range of 100 mPa.s to 7500 mPa.s using a Brookfield^{™} viscometer with an RV-4 Spindle at 20 rpm at 25°C; alternatively a viscosity in a range of 100 mPa.s to 7000 mPa.s using a Brookfield^{™} viscometer with an RV-4 Spindle at 20 rpm at 25°C; alternatively a viscosity in a range of 200 mPa.s to 7000 mPa.s using a Brookfield^{™} viscometer with an RV-4 Spindle at 20 rpm at 25°C; alternatively a viscosity in a range of 300 mPa.s to 5000 mPa.s using a Brookfield^{™} viscometer with an RV-4 Spindle at 20 rpm at 25°C.

In the case of (v)(b') the mixture may comprise polyorganosiloxanes containing at least two unsaturated groups, selected from alkenyl groups and alkynyl groups, per molecule and having a viscosity in a range of 50 mPa.s to 60,000 mPa.s at 25°C, alternatively 50 mPa.s to 25,000 mPa.s at 25°C, 100 mPa.s to 25,000 mPa.s at 25°C, alternatively 100 mPa.s to 15,000 mPa.s at 25°C, alternatively 100 mPa.s to 10,000 mPa.s at 25°C, providing the viscosity of the resulting mixture has a viscosity in a range of 50 mPa.s to 9000 mPa.s using a Brookfield^{™} viscometer with an RV-4 Spindle at e.g. 20 rpm at 25°C, in an amount of from 25 to 60 wt. % of the composition, alternatively in an amount of from 30 to 60 wt. % of the composition, alternatively in an amount of from 35 to 55 wt. % of the composition.

The viscosity of individual polymers in (v)(b') having a viscosity greater than 10,000mPa.s measured at 25°C may be measured using a Brookfield^{™} rotational viscometer with spindle LV-4 (designed for viscosities in the range between 10,000-2,000,000 mPa.s) adapting the speed according to the polymer viscosity for example at 6 rpm.

Each polyorganosiloxane of component (v) is a polydiorganosiloxane having at least two unsaturated groups per molecule, which unsaturated groups are selected from alkenyl or alkynyl groups. Alternatively, each polyorganosiloxane of component (v) has at least three unsaturated groups per molecule.

The unsaturated groups of each polyorganosiloxane of component (v) may be terminal, pendent, or in both locations. Alkenyl groups may have 2 to 30, alternatively 2 to 24, alternatively 2 to 20, alternatively 2 to 12, alternatively 2 to 10, and alternatively 2 to 6 carbon atoms. Alkenyl is exemplified by, but not limited to, vinyl, allyl, methallyl, propenyl, and hexenyl and cyclohexenyl groups. Alkynyl may be exemplified by, but not limited to, ethynyl, propynyl, and butynyl groups. Alkynyl groups may have 2 to 30, alternatively 2 to 24, alternatively 2 to 20, alternatively 2 to 12, alternatively 2 to 10, and alternatively 2 to 6 carbon atoms.

Each polyorganosiloxane of component (v) has multiple units of the formula (I): R'ₐSiO_{(4-a)/2} (I) in which each R' is independently selected from an aliphatic hydrocarbyl, or aliphatic non-halogenated organyl group (that is any aliphatic organic substituent group, regardless of functional type, having one free valence at a carbon atom). Saturated aliphatic hydrocarbyls are exemplified by, but not limited to alkyl groups such as methyl, ethyl, propyl, pentyl, octyl, undecyl, and octadecyl and cycloalkyl groups such as cyclohexyl. Unsaturated aliphatic hydrocarbyls are exemplified by, but not limited to the alkenyl groups and alkynyl groups described above. The aliphatic non-halogenated organyl groups are exemplified by, but not limited to, suitable nitrogen containing groups such as amido groups, imido groups; oxygen containing groups such as polyoxyalkylene groups, carbonyl groups, alkoxy groups and hydroxyl groups. Further organyl groups may include sulfur containing groups, phosphorus containing groups, boron containing groups. The subscript "a" is 0, 1, 2 or 3.

Siloxy units may be described by a shorthand (abbreviated) nomenclature, namely - "M," "D," "T," and "Q", when R' is as described above, alternatively an alkyl group, typically a methyl group. The M unit corresponds to a siloxy unit where a = 3, that is R'₃SiO_{1/2}; the D unit corresponds to a siloxy unit where a = 2, namely R'₂SiO_{2/2}; the T unit corresponds to a siloxy unit where a = 1, namely R'₁SiO_{3/2}; the Q unit corresponds to a siloxy unit where a = 0, namely SiO_{4/2}. Each polyorganosiloxane of component (v) is substantially linear but may contain a proportion of branching due to the presence of T units (as previously described) within the molecule, hence the average value of a in structure (I) is about 2.

Examples of typical groups on each polyorganosiloxane of component (v) as described above include at least two unsaturated groups, selected from alkenyl groups and alkynyl groups, per molecule typically alkenyl groups and having a viscosity in a range as described above include mainly alkenyl, alkynyl and/or alkyl groups, alternatively alkenyl, and/or alkyl groups. The groups may be in pendent position (on a D or T siloxy unit) or may be terminal (on an M siloxy unit).

Each polyorganosiloxane of component (v) may be selected from polydimethylsiloxanes, alkylmethylpolysiloxanes, alkylarylpolysiloxanes or copolymers thereof (where reference to alkyl means any suitable alkyl group, alternatively an alkyl group having two or more carbons) containing e.g., alkenyl and/or alkynyl groups and may have any suitable terminal groups, for example, they may be trialkyl terminated, alkenyldialkyl terminated alkynyldialkyl terminated or may be terminated with any other suitable terminal group combination providing each polymer contains at least two unsaturated groups selected from alkenyl and alkynyl groups per molecule. In one embodiment the terminal groups of such a polymer don't comprise any silanol terminal groups. Hence each polyorganosiloxane of component (v) may, for the sake of example, be:
a dialkylalkenyl terminated polydimethylsiloxane, e.g., dimethylvinyl terminated polydimethylsiloxane; a dialkylalkenyl terminated dimethylmethylphenylsiloxane, e.g., dimethylvinyl terminated dimethylmethylphenylsiloxane; a trialkyl terminated dimethylmethylvinyl polysiloxane; a dialkylvinyl terminated dimethylmethylvinyl polysiloxane copolymer; a dialkylvinyl terminated methylphenylpolysiloxane, a dialkylalkenyl terminated methylvinylmethylphenylsiloxane; a dialkylalkenyl terminated methylvinyldiphenylsiloxane; a dialkylalkenyl terminated methylvinyl methylphenyl dimethylsiloxane; a trimethyl terminated methylvinyl methylphenylsiloxane; a trimethyl terminated methylvinyl diphenylsiloxane; or a trimethyl terminated methylvinyl methylphenyl dimethylsiloxane.

Hence, the adhesion mediator composition used in the process herein may comprise:
(i) A trialkoxysilane, of the formula Si(OR)₃R¹ wherein each R may be the same or different and is an alkyl group having at least two carbons per group and each R¹ may be the same or different and is an unsaturated group selected from an alkenyl group or an alkynyl group; which trialkoxysilane is present in an amount of from 20 to 40 wt. % of the composition, alternatively from 25 wt. % to 38 wt. % of the adhesion mediator composition, alternatively from 25 wt. % to 35 wt. % of the adhesion mediator composition;
(ii) A platinum group metal based hydrosilylation reaction catalyst in an amount of from 0.1-1.5 wt. % of the composition, alternatively from 0.1-1.0 wt. %, alternatively 0.1 to 0.5 wt. %, of the composition;
(iii) An alkoxy titanium compound having from 2 to 4 alkoxy groups, in an amount of from 1 to 10 wt. %, alternatively from 2 to 8 wt. %, alternatively from 2 to 7 wt. % of the composition;
(iv) A tetraalkoxysilane of the formula Si(OR²)₄ wherein each R² may be the same or different and is having at least two carbons per group, which tetraalkoxysilane is present in an amount of from 5 to 20 wt. % of the composition alternatively from 5 to 15 wt. %, alternatively from 7 to 15 wt. %; and
(v) Either
   (a') a polyorganosiloxane containing at least two unsaturated groups, selected from alkenyl groups and alkynyl groups, per molecule and having a viscosity in a range of 50 mPa.s to 9000 mPa.s alternatively a viscosity in a range of 100 mPa.s to 9000 mPa.s; alternatively a viscosity in a range of 100 mPa.s to 8000 mPa.s alternatively a viscosity in a range of 100 mPa.s to 7500 mPa.s; alternatively a viscosity in a range of 100 mPa.s to 7000 mPa.s alternatively a viscosity in a range of 200 mPa.s to 7000 mPa.s; alternatively a viscosity in a range of 300 mPa.s to 5000 mPa.s; in each case using a Brookfield^{™} viscometer with an RV-4 Spindle at 20 rpm at 25°C; or
   (b') a mixture of two or more polyorganosiloxanes containing at least two unsaturated groups, selected from alkenyl groups and alkynyl groups, per molecule, which mixture has viscosity in a range of 50 mPa.s to 9000 mPa.s alternatively a viscosity in a range of 100 mPa.s to 9000 mPa.s; alternatively a viscosity in a range of 100 mPa.s to 8000 mPa.s alternatively a viscosity in a range of 100 mPa.s to 7500 mPa.s; alternatively a viscosity in a range of 100 mPa.s to 7000 mPa.s alternatively a viscosity in a range of 200 mPa.s to 7000 mPa.s; alternatively a viscosity in a range of 300 mPa.s to 5000 mPa.s; in each case using a Brookfield^{™} viscometer with an RV-4 Spindle at 20 rpm at 25°C;
   wherein said component (v) is present in an amount of from 25 to 60 wt. % of the composition, alternatively in an amount of from 30 to 60 wt. % of the composition, alternatively in an amount of from 35 to 55 wt. % of the composition.

Any suitable combination of components (i) to (v) may be utilised with or without additives but the total wt. % of the composition is 100 wt. % irrespective of whether or not additives are included. In one embodiment of the disclosure herein, the adhesion mediator composition used in the process herein may comprise:
(i) A trialkoxysilane, of the formula Si(OR)₃R¹ wherein each R may be the same or different and is an alkyl group having at least two carbons per group and each R¹ may be the same or different and is an unsaturated group selected from an alkenyl group or an alkynyl group; which trialkoxysilane is present in an amount of from 20 to 40 wt. % of the composition, alternatively from 25 wt. % to 38 wt. % of the adhesion mediator composition, alternatively from 25 wt. % to 35 wt. % of the adhesion mediator composition;
(ii) A platinum group metal based hydrosilylation reaction catalyst selected from one or more coordination compounds of platinum in an amount of from 0.1-1.5 wt. % of the composition, alternatively from 0.1-1.0 wt. %, alternatively 0.1 to 0.5 wt. %, of the composition;
(iii) An alkoxy titanium compound having from 2 to 4 alkoxy groups selected from Ti(OR³)₄, Ti(OR³)₃R⁴, Ti(OR³)₂R⁴₂ where each R⁴ is the same or different and is selected from an alkyl group, an alkenyl group or an alkynyl group and each R³ is selected from an isobutyl group or n-butyl group or component (iii) is an ester of titanic acid and the enolate of acetoacetic ester; in an amount of from 1 to 10 wt. %, alternatively from 2 to 8 wt. %, alternatively from 2 to 7 wt. % of the composition;
(iv) A tetraalkoxysilane of the formula Si(OR²)₄ wherein each R² may be the same or different and is an alkyl group in an amount of from 5 to 20 wt. % of the composition alternatively from 5 to 15 wt. %, alternatively from 7 to 15 wt. %; and
(v) Either
   (a') a polyorganosiloxane containing at least two unsaturated groups, selected from alkenyl groups and alkynyl groups, per molecule and having a viscosity in a range of 50 mPa.s to 9000 mPa.s, alternatively a viscosity in a range of 100 mPa.s to 9000 mPa.s; alternatively a viscosity in a range of 100 mPa.s to 8000 mPa.s alternatively a viscosity in a range of 100 mPa.s to 7500 mPa.s; alternatively a viscosity in a range of 100 mPa.s to 7000 mPa.s alternatively a viscosity in a range of 200 mPa.s to 7000 mPa.s; alternatively a viscosity in a range of 300 mPa.s to 5000 mPa.s; in each case using a Brookfield^{™} viscometer with an RV-4 Spindle at 20 rpm at 25°C using a Brookfield^{™} viscometer with an RV-4 Spindle at 20 rpm at 25°C; or
   (b') a mixture of two or more polyorganosiloxanes containing at least two unsaturated groups, selected from alkenyl groups and alkynyl groups, per molecule, which mixture has a viscosity in a range of having a viscosity in a range of 50 mPa.s to 9000 mPa.s alternatively a viscosity in a range of 100 mPa.s to 9000 mPa.s; alternatively a viscosity in a range of 100 mPa.s to 8000 mPa.s alternatively a viscosity in a range of 100 mPa.s to 7500 mPa.s; alternatively a viscosity in a range of 100 mPa.s to 7000 mPa.s alternatively a viscosity in a range of 200 mPa.s to 7000 mPa.s; alternatively a viscosity in a range of 300 mPa.s to 5000 mPa.s; in each case using a Brookfield^{™} viscometer with an RV-4 Spindle at 20 rpm at 25°C using a Brookfield^{™} viscometer with an RV-4 Spindle at 20 rpm at 25°C;
wherein said component (v) is present in an amount of from 25 to 60 wt. % of the composition, alternatively in an amount of from 30 to 60 wt. % of the composition, alternatively in an amount of from 35 to 55 wt. % of the composition.

Any suitable combination of components (i) to (v) may be utilised with or without additives but the total wt. % of the composition is 100 wt. % irrespective of whether or not additives are included. The adhesion mediator composition utilised in the process herein may be homogeneously mixed using any suitable mixing means, indeed for laboratory purposes the composition was hand mixed in an appropriately sized container using a spoon or spatula or the like.

The adhesion mediator composition utilised in the method herein is not, in our view, a primer because it functions differently. A standard primer is a preparatory coating applied on to a substrate and then in an essential step is left to dry and/or cure prior to addition of the next layer. In this disclosure the adhesion mediator composition does not undergo an essential drying/curing step to provide improved adhesion between the substrate and the silicone elastomer. Furthermore, there is no harmful or toxic solvent(s) contained in the composition designed to be evaporated as part of a drying process. In the process herein there was no need to wait for the adhesion mediator layer to dry or cure, indeed in one embodiment it is preferred for the hydrosilylation curable silicone rubber composition to be applied before the layer adhesion mediator has solidified or cured. This significantly reduces environmental issues resulting from the release of volatile organic compounds (VOCs) often linked to the use of primers as well as regulatory issues like skin contact and food contact applications. Instead, a reactive diluent (component (v)) is employed which is non-volatile. The adhesion mediator as a whole will react and be incorporated in the LSR/composite article. Once the adhesion mediator composition has been applied onto the inorganic substrate, the hydrosilylation curable silicone rubber composition may be immediately applied on top of the adhesion mediator composition after which the hydrosilylation curable silicone rubber composition is cured at an appropriate temperature and pressure to form the composite part/article. The fact that the drying step is unnecessary has the additional effect of shorter processing times and higher productivity compared to common primer solutions.

### Step (c)

In step (c), the hydrosilylation curable silicone rubber composition is applied onto the substrate treated with the adhesion mediator composition in step (b). Preferably this may be undertaken as soon as the adhesion mediator composition has been applied on to the optionally activated substrate. By undertaking this step straight away, the adhesion mediator composition is able to soak into the hydrosilylation curable silicone rubber composition surface at the inorganic substrate/hydrosilylation curable silicone rubber composition interface such that the adhesion mediator composition and hydrosilylation curable silicone rubber composition effectively "cure" together at the surface of the inorganic material during step (d).

Any suitable hydrosilylation curable silicone rubber compositions may be applied onto the inorganic substrate coated with the adhesion mediator composition. A standard hydrosilylation curable silicone rubber (or LSR) composition used for application onto the adhesion mediator composition treated inorganic substrate may comprise:
(I) One or more polyorganosiloxane polymers, e.g., one or more polydiorganosiloxane polymers having the chemical structure as described in component (v) of the adhesion mediator composition described above having a viscosity of from 1000 to 100,000 mPa.s at 25°C;
(II) Optionally one or more finely divided, reinforcing fillers, alternatively one or more finely divided, reinforcing fillers in an amount of from 5 to 40 wt. % of the composition;
(III) an organohydrogenpolysiloxane having at least two, alternatively at least three Si-H groups per molecule;
(IV) a platinum group metal based hydrosilylation reaction catalyst such as described in component (ii) of the adhesion mediator composition described above; and optionally
(V) a cure inhibitor.

### Component (I)

Component (I) of the standard hydrosilylation curable silicone rubber (or LSR) composition is one or more polyorganosiloxane polymers, e.g., one or more polydiorganosiloxane polymers having the chemical structure as described in component (v) of the adhesion mediator composition described above but which may have a viscosity of from 1000 to 100,000 mPa.s at 25°C measured as described previously. In the case of component (I) the polymer is present in the composition in an amount of from 35 to 85 wt. % of the composition.

### Component (II)

Component (II) of the standard hydrosilylation curable silicone rubber (or LSR) composition is one or more reinforcing fillers which are preferably provided in a finely divided form.

The reinforcing fillers of component (II) may be exemplified by fumed silica and/or a precipitated silica (in each case preferably finely divided) and/or suitable silicone resins.

Precipitated silica fumed silica and/or colloidal silicas are particularly preferred because of their relatively high surface area, which is typically at least 50 m²/g (BET method in accordance with ISO 9277: 2010). Fillers having surface areas of from 50 to 450 m²/g (BET method in accordance with ISO 9277: 2010), alternatively of from 50 to 300 m²/g (BET method in accordance with ISO 9277: 2010), are typically used. All these types of silica are commercially available.

When reinforcing filler (II) is naturally hydrophilic (e.g., untreated silica fillers), it is typically treated with a treating agent to render it hydrophobic. These surface modified reinforcing fillers (II) do not clump and can be homogeneously incorporated into polydiorganosiloxane polymer (v), described below, as the surface treatment makes the fillers easily wetted by polydiorganosiloxane polymer (v).

Typically reinforcing filler (II) may be surface treated with any low molecular weight organosilicon compounds disclosed in the art applicable to prevent creping of LSR compositions during processing. For example, organosilanes, polydiorganosiloxanes, or organosilazanes e.g., hexaalkyl disilazane, short chain siloxane diols to render the filler(s) hydrophobic and therefore easier to handle and obtain a homogeneous mixture with the other ingredients. Specific examples include, but are not restricted to, silanol terminated trifluoropropylmethylsiloxane, silanol terminated vinyl methyl (ViMe) siloxane, silanol terminated methyl phenyl (MePh) siloxane, liquid hydroxyldimethyl-terminated polydiorganosiloxane containing an average from 2 to 20 repeating units of diorganosiloxane in each molecule, hydroxyldimethyl terminated Phenylmethyl Siloxane, hexaorganodisiloxanes, such as hexamethyldisiloxane, divinyltetramethyldisiloxane; hexaorganodisilazanes, such as hexamethyldisilazane (HMDZ), divinyltetramethyldisilazane and tetramethyldi(trifluoropropyl)disilazane; hydroxyldimethyl terminated polydimethylmethylvinyl siloxane, octamethyl cyclotetrasiloxane, and silanes including but not limited to methyltrimethoxysilane, dimethyldimethoxysilane, vinyltrimethoxysilane, methyltriethoxysilane, vinyltriethoxysilane, chlrotrimethyl silane, dichlrodimethyl silane, trichloromethyl silane.

In one embodiment, the treating agent may be selected from silanol terminated vinyl methyl (ViMe) siloxane, liquid hydroxyldimethyl-terminated polydiorganosiloxane containing an average from 2 to 20 repeating units of diorganosiloxane in each molecule, hexaorganodisiloxanes, such as hexamethyldisiloxane, divinyltetramethyldisiloxane; hexaorganodisilazanes, such as hexamethyldisilazane (HMDZ), divinyltetramethyldisilazane and; hydroxyldimethyl terminated polydimethylmethylvinyl siloxane, octamethyl cyclotetrasiloxane, and silanes including but not limited to methyltriethoxysilane, dimethyldiethoxysilane and/or vinyltriethoxysilane. A small amount of water can be added together with the silica treating agent(s) as processing aid.

The surface treatment of untreated reinforcing filler (II) may be undertaken prior to introduction in the composition or in situ (i.e., in the presence of at least a portion of the other ingredients of the composition herein by blending these ingredients together at room temperature or above until the filler is completely treated. Typically, untreated reinforcing filler (II) is treated in situ with a treating agent in the presence of polydiorganosiloxane polymer (I) which results in the preparation of a silicone rubber base material which can subsequently be mixed with other ingredients.

Reinforcing filler (II) is optionally present in an amount of up to 40 wt. % of the composition, alternatively from 1.0 to 40wt. % of the composition, alternatively of from 5.0 to 35wt. % of the composition, alternatively of from 10.0 to 35wt. % of the composition.

### Component (III)

Component (III) of the standard hydrosilylation curable silicone rubber (or LSR) composition is a cross-linker in the form of a polyorganosiloxane containing at least two or three silicon-bonded hydrogen atoms per molecule. Component (III) normally contains three or more silicon-bonded hydrogen atoms so that the hydrogen atoms can react with the unsaturated alkenyl or alkynyl groups of polymer (I) to form a network structure therewith and thereby cure the composition. Some or all of Component (III) may alternatively have two silicon bonded hydrogen atoms per molecule when polymer (I) has greater than two unsubstituted groups per molecule.

The molecular configuration of the polyorganosiloxane containing at least two or three silicon-bonded hydrogen atoms per molecule (III) is not specifically restricted, and it can be a straight chain, a straight chain with some branching, cyclic or silicone resin based.

While the molecular weight of component (III) is not specifically restricted, the viscosity is typically from 15 to 50,000 mPa.s at 25°C relying on either a Brookfield^{™} rotational viscometer with spindle LV-4 (designed for viscosities in the range between 1,000-2,000,000 mPa.s) or a Brookfield^{™} rotational viscometer with spindle LV-1 (designed for viscosities in the range between 15 -20,000 mPa.s) for viscosities less than 1000 mPa.s and adapting the speed according to the polymer viscosity, in order to obtain a good miscibility with polymer (I).

Silicon-bonded organic groups used in component (III) may be exemplified by alkyl groups such as methyl, ethyl, propyl, n-butyl, t-butyl, pentyl, hexyl; phenyl, tolyl, xylyl, or similar aryl groups; 3-chloropropyl, 3,3,3-trifluoropropyl, or similar halogenated alkyl group, preferable of which are methyl and phenyl groups. Preferably the silicon-bonded organic groups used in component (III) are alkyl groups, alternatively methyl, ethyl or propyl groups.

Examples of the polyorganosiloxane containing at least two or three silicon-bonded hydrogen atoms per molecule (III) include but are not limited to:
(a") trimethylsiloxy-terminated methylhydrogenpolysiloxane,
(b") trimethylsiloxy-terminated polydimethylsiloxane-methylhydrogensiloxane,
(c") dimethylhydrogensiloxy-terminated dimethylsiloxane-methylhydrogensiloxane copolymers,
(d") dimethylsiloxane-methylhydrogensiloxane cyclic copolymers,
(e") copolymers and/or silicon resins consisting of (CH₃)₂HSiO_{1/2} units, (CH₃)₃SiO_{1/2} units and SiO_{4/2} units,
(f") copolymers and/or silicone resins consisting of (CH₃)₂HSiO_{1/2} units and SiO_{4/2} units,
(g") Methylhydrogensiloxane cyclic homopolymers having between 3 and 10 silicon atoms per molecule;
alternatively, component B, the cross-linker, may be a filler, e.g., silica treated with one of the above, and mixtures thereof.

Component (III) can be exemplified by the following compounds: a methylhydrogenpolysiloxane capped at both molecular terminals with trimethylsiloxy groups; a copolymer of a methylhydrogensiloxane and a dimethylsiloxane capped at both molecular terminals with trimethylsiloxy groups; dimethylsiloxane capped at both molecular terminals with dimethylhydrogensiloxy groups; a copolymer of a methylhydrogensiloxane and a dimethylsiloxane capped at both molecular terminals with dimethylhydrogensiloxy groups; a copolymer of a methylhydrogensiloxane and a methylphenylsiloxane capped at both molecular terminals with dimethylphenylsiloxy groups; a cyclic methylhydrogenpolysiloxane; a copolymer consisting of (CH₃)₂HSiO_{1/2} siloxane units and SiO_{4/2} units; a copolymer consisting of (CH₃)₂HSiO_{1/2} siloxane units, (CH₃)₃SiO_{1/2} siloxane units, and SiO_{4/2} units, the aforementioned polyorganosiloxanes in which a part or all methyl groups are substituted with ethyl, propyl, or similar alkyl groups; phenyl, tolyl, or similar aryl groups; 3,3,3-trifluoropropyl, or similar halogenated alkyl groups; or a mixture of two or more of the aforementioned polyorganosiloxanes. In one embodiment the Component (III) is selected from a methylhydrogenpolysiloxane capped at both molecular terminals with trimethylsiloxy groups; a copolymer of a methylhydrogensiloxane and a dimethylsiloxane capped at both molecular terminals with trimethylsiloxy groups; dimethylsiloxane capped at both molecular terminals with dimethylhydrogensiloxy groups; a copolymer of a methylhydrogensiloxane and a dimethylsiloxane capped at both molecular terminals with dimethylhydrogensiloxy groups.

The polyorganosiloxane cross-linker (III) is generally present in the curable silicone elastomer composition such that the molar ratio of the total number of the silicon-bonded hydrogen atoms in component (III) to the total number of alkenyl and/or alkynyl groups in polymer (v) is from 0.5:1 to 20:1. When this ratio is less than 0.5:1, a well-cured composition will not be obtained. When the ratio exceeds 20:1, there is a tendency for the hardness of the cured composition to increase when heated. Preferably in an amount such that the ratio of the mole number of silicon-bonded hydrogen atoms of component (III) to the mole number of alkenyl groups of component (I) ranges from 0.7 : 1.0 to 5.0 : 1.0, preferably from 0.9 : 1.0 to 2.5 : 1.0, and most preferably from 0.9 : 1.0 to 2.0 : 1.0.

The silicon-bonded hydrogen (Si-H) content of component (III) is determined using quantitative infrared analysis in accordance with ASTM E168. In the present instance the silicon-bonded hydrogen to alkenyl (vinyl) and/or alkynyl ratio is important when relying on a hydrosilylation cure process. Generally, this is determined by calculating the total weight % of alkenyl groups in the composition, e.g., vinyl [V] and the total weight % of silicon bonded hydrogen [H] in the composition and given the molecular weight of hydrogen is 1 and of vinyl is 27 the molar ratio of silicon bonded hydrogen to vinyl is 27[H]/[V].

Typically, dependent on the number of unsaturated groups in component (I) and the number of Si-H groups in component (III), component (III) will be present in an amount of from 0.1 to 25% by weight of the LSR composition, alternatively from 0.1 to 20%, by weight of the LSR composition alternatively 0.1 to 15% by weight of the LSR composition, further alternatively from 0.5% to 10% by weight of the LSR composition.

### Component (IV)

Component (IV) of the standard hydrosilylation curable silicone rubber (or LSR) composition is a platinum group metal based hydrosilylation reaction catalyst such as described in component (ii) of the adhesion mediator composition described above. Component (IV) may alternatively be a UV-Platinum catalyst system. It is typically present in a quantity of platinum atom that provides from 0.1 to 500ppm (parts per million) with respect to the weight of the reactive ingredients, components (I) and (III). The catalyst may be added as a single species or as a mixture of two or more different species. Typically, dependent on the form/concentration in which the catalyst is provided the amount of catalyst present will be within the range of from 0.05-1.5 wt. % of the composition, alternatively from 0.05-1.0 wt. %, alternatively from 0.1-1.0 wt. %, alternatively 0.1 to 0.5 wt. %, of the composition, wherein the platinum catalyst is provided in a masterbatch of polymer such as (I) and (v) described above.

In one embodiment the hydrosilylation catalysts are co-ordination compounds of platinum. and the final composite contains a maximum of 50mg of platinum per kg, typically the cumulative total of platinum present in the adhesion mediator described above and the silicone rubber material being applied onto the inorganic substrate. content of the adhesion mediator herein.

### Component (V)

Component (V) of the standard hydrosilylation curable silicone rubber (or LSR) composition is one or more optional cure inhibitors. Cure inhibitors are used, when required, to prevent or delay the addition-reaction curing process especially during storage. The optional Addition-reaction inhibitors of platinum-based catalysts are well known in the art and include hydrazines, triazoles, phosphines, mercaptans, organic nitrogen compounds, acetylenic alcohols, silylated acetylenic alcohols, maleates, fumarates, ethylenically or aromatically unsaturated amides, ethylenically unsaturated isocyanates, olefinic siloxanes, unsaturated hydrocarbon monoesters and diesters, conjugated ene-ynes, hydroperoxides, nitriles, and diaziridines. Alkenyl-substituted siloxanes as described in US3989667 may be used, of which cyclic methylvinylsiloxanes are preferred.

One class of known hydrosilylation reaction inhibitors are the acetylenic compounds disclosed in US3445420. Acetylenic alcohols such as 2-methyl-3-butyn-2-ol constitute a preferred class of inhibitors that will suppress the activity of a platinum-containing catalyst at 25 °C. Compositions containing these inhibitors typically require heating at temperature of 70 °C or above to cure at a practical rate.

Examples of acetylenic alcohols and their derivatives include 1-ethynyl-1-cyclohexanol (ETCH), 2-methyl-3-butyn-2-ol, 3-butyn-1-ol, 3-butyn-2-ol, propargyl alcohol, 1-phenyl-2-propyn-1-ol, 3,5-dimethyl-1-hexyn-3-ol, 1-ethynylcyclopentanol, 3-methyl-1-penten-4-yn-3-ol, and mixtures thereof. Derivatives of acetylenic alcohol may include those compounds having at least one silicon atom. When present, inhibitor concentrations as low as 1 mole of inhibitor per mole of the metal of catalyst will in some instances impart satisfactory storage stability and cure rate. In other instances, inhibitor concentrations of up to 500 moles of inhibitor per mole of the metal of catalyst are required. The optimum concentration for a given inhibitor in a given composition is readily determined by routine experimentation. Dependent on the concentration and form in which the inhibitor selected is provided/available commercially, when present in the composition, the inhibitor is typically present in an amount of from 0.0125 to 10% by weight of the composition.

In one embodiment the inhibitor, when present, is selected from 1-ethynyl-1-cyclohexanol (ETCH) and/or 2-methyl-3-butyn-2-ol and is present in an amount of greater than zero to 0.1 % by weight of the composition.

Such compositions may also comprise one or more optional additives depending on the intended use. Examples include mold releasing agents, non-reinforcing fillers, adhesion catalysts, peroxides, pigments, electrically conductive fillers, thermally conductive fillers, pot life extenders, flame retardants, lubricants, mold release agents, UV light stabilizers, bactericides, wetting agents, heat stabilizers, compression set additives and plasticizers or the like. In one embodiment the composition contains no optional additives other than component (V) above.

The hydrosilylation curable silicone rubber compositions described above are usually stored before use in two or more parts. In the case of a two-part composition, the two parts are usually referred to as part (A) and part (B):
Part (A) typically contains the catalyst (IV) in addition to polyorganosiloxane (I) and filler (II) when present, and
Part (B) usually includes component (III), and when present component (V) inhibitor as well as remaining polyorganosiloxane (I) and/or the filler (II).

It is important for the catalyst (IV) to be stored separately from cross-linker (III) to prevent premature cure during storage.

Any optional additives may be in either part (A) or part (B) or in both parts providing they do not negatively affect the storage of any of the essential ingredients present in the respective part. A wide variety of hydrosilylation curable silicone compositions which may be utilised in the process herein are commercially available on the market. These include, for the sake of example, Silastic^{™} RBL-9200-20(-70) LSR; Xiameter^{™} RBL 2004-20(-75) LSR; Silastic^{™} NPC 9300-40/-50/-70 LSR; Silastic^{™} LTC 9400-40/-50 LSR and Silastic^{™} 3D 3335 LSR all available from Dow Silicones Corporation of Midland, Michigan. Other hydrosilylation curable silicone compositions which may be utilised in the process herein include moldable silicones such as those described in US 8,691,910 B2, US 8,853,332 B2 and US 8,859,693 B2.

The homogeneous mixing of the components of hydrosilylation curable silicone rubber compositions used herein may be undertaken using a suitable mixing means such as a kneader mixer, a static mixer in a liquid injection molding machine, a Z-blade mixer, a two-roll mill (open mill), a three-roll mill, a Haake^{™} Rheomix OS Lab mixer, a screw extruder or a twin-screw extruder or the like. Speed mixers as sold by e.g., Hauschild and as DC 150.1 FV, DAC 400 FVZ or DAC 600 FVZ, may alternatively be used.

The hydrosilylation curable silicone rubber composition is applied onto the surface of an inorganic substrate, in step (c) subsequent to the inorganic substrate material being coated with adhesion mediator composition in step (b). The hydrosilylation curable silicone rubber compositions may be applied by any suitable means such as rolling, spreading, 3-D printing and the like. The hydrosilylation curable silicone rubber compositions used in the process described herein may therefore be applied and cured on to the treated inorganic substrate by any suitable route e.g., by injection moulding, using e.g., 2K type injection molding, press moulding, extrusion moulding, transfer moulding, press vulcanization, or calendaring. In one embodiment the composite is prepared by injection moulding, using a 2K type injection molding unit. The hydrosilylation curable silicone rubber compositions as hereinbefore described may be applied to the surface of an inorganic substrate, subsequent to the inorganic substrate material being coated with adhesion mediator composition.

In the case of using a 3-D printing method, a typical method of forming a three-dimensional (3-D) article may comprise multiple steps. For example, after the adhesion mediator composition has been applied onto an inorganic substrate surface, the method may comprise (i) printing a first hydrosilylation curable silicone rubber composition with a 3-D printer to form a layer on top of the treated inorganic substrate. The method may further comprise (ii) heating the layer to form an at least partially cured layer. In addition, the method may comprise (iii) printing a second heat-curable silicone composition on the at least partially cured layer with the 3-D printer to form a subsequent layer. The method may also comprise (iv) heating the subsequent layer to form an at least partially cured subsequent layer. Optionally, steps iii) and iv) may be repeated with independently selected hydrosilylation curable silicone rubber composition(s) for any additional layer(s) to form the 3-D composite article. If desired the inorganic substrate may be cleaned and/or activated or partially activated (e.g., due to masking part of the inorganic substrate surface resulting in only the unmasked region being activated) prior to step (i).

In one embodiment of the process hereinbefore defined step (c) of the process may therefore be undertaken by 3-D printing a hydrosilylation curable silicone rubber composition onto an inorganic substrate surface e.g., an inorganic substrate surface previously treated with an adhesion mediator composition as described herein. In such a case, steps (c) and (d) may be as follows:
printing a first hydrosilylation curable silicone rubber composition as hereinbefore described with a 3-D printer to form a layer on the optionally cleaned and/or activated inorganic substrate, treated with adhesion mediator composition resulting from steps (a) and (b);
i. heating the layer to form an at least partially cured layer;
ii. printing a second hydrosilylation curable silicone rubber composition on the at least partially cured layer with the 3-D printer to form a subsequent layer;
iii. heating the subsequent layer to form an at least partially cured subsequent layer; and,
iv. optionally, repeating steps iii) and iv) with independently selected heat-curable silicone composition(s) for any additional layer(s) to form the 3-D article.

### Step (d)

Finally, in step (d), the hydrosilylation curable silicone rubber composition is cured at a temperature of from 80°C to 190°C, alternatively from 100°C to 180°C, alternatively from 100°C to 170°C, alternatively from 110°C to 170°C, alternatively from 110°C to 160°C.

Curing of the hydrosilylation curable silicone rubber composition on the inorganic substrate can be undertaken in any suitable manner, this may be dependent on the manner by which the hydrosilylation curable silicone rubber composition is applied in step (c). For example, curing may take place in a mold to form a molded composite part/with the silicone elastomer resulting from the cure process adhered to an inorganic substrate. In the case of this inorganic substrate, the hydrosilylation curable silicone rubber compositions used herein may for example be injection molded to form an article adhered to the inorganic material subsequent to the inorganic material being coated with adhesion mediator composition, or the composition can be overmolded by injection moulding around such inorganic substrates or articles or over an inorganic substrate subsequent to the inorganic material being coated with adhesion mediator composition.

When cured in the presence of a heat sensitive inorganic substrate, the hydrosilylation curable silicone rubber compositions as hereinbefore described may be cured under such conditions enabling development of mechanical adhesion with the heat sensitive substrate and the like, and more specifically, by using a temperature and curing time at which the heat sensitive inorganic substrate is not deformed, melted, or denatured.

There is also provided, an article or a composite part of an article obtained or obtainable from the above method.

In one embodiment herein there is provided an article or composite part consisting of a silicone elastomer cured from hydrosilylation curable silicone rubber composition on a rigid or flexible inorganic substrate such as the type described above, providing the rigid or flexible substrate was coated with a layer of adhesion mediator composition in step (b) of the process prior to the application of the hydrosilylation curable silicone rubber composition in step (c) of the process.

Examples of such articles or composite parts, in the case of all of the above can be found in various industries including, but not limited to, automotive applications, industrial applications, electronic applications and consumer applications such as packaging, storage, treatment, production, preparation, processing, consumption and molding of food and drink products for human consumption provided they meet the necessary regulations such as for household products, food contact, dish washer compatibility or beverage/fluid compliance (e.g., hot water, coffee, tea contact in machines). In automotive applications, this may include housings with a silicone seal or gasket, plugs and connectors, components of various sensors, membranes, diaphragms, climate venting components, and the like. Electronic applications may include mobile phone cover seals, mobile phone accessories, precision electronic equipment, electrical switches and switch covers, watches and wristbands, wearable apparatus, e.g., facemasks, wearable electronic devices, and the like.

A composite part may also be selected from parts of mobile phones, mobile telecommunications equipment, gaming machines, clocks, image receivers, DVD equipment, MD (minidisc) equipment, CD equipment, and other precision electronic equipment, TVs, thin displays of liquid crystal TVs and plasma TVs, various home appliance, copying machines, printers, facsimile machines, and other office equipment, connector seals, spark plug caps, components of various sensors, and other automobile components.

Composite articles and/or parts comprising or consisting of silicone rubber and inorganic materials used in the transport, packaging, storage, treatment, production, preparation, processing, consumption and molding of household products and/or food and drink products for human consumption may include parts of machines for production, preparation, shaping and processing of food products, baking utensils, such as baking molds, kitchen equipment and/or food and drink processing equipment such as drink makers, kettles, cutlery, crockery, cookery ware, drinking vessels, including feeding bottles for infants, other types of containers, trays, food molds, as well as parts in ovens, including microwave ovens, refrigerators, breadmakers, rice cookers, and/or dish washers and containers used for transport and materials that contact water intended for human consumption and the like.

### Examples

In the following examples, unless otherwise indicated all viscosities were measured at 25 °C using a Brookfield^{™} rotational viscometer with spindle RV-4 for viscosities less than 10,000 mPa.s, in each case at a speed of 20rpm.

Each cleaned and/or activated substrate was coated with a layer of adhesion mediator composition as hereinbefore described or a comparative coating composition as indicated in the respective Table using a pipette to apply the adhesion mediator composition or a comparative coating composition as indicated in the respective Tables and then wiping the composition over the surface of the substrate to provide a continuous layer of said composition over the substrate. The substrates coated with adhesion mediator (Ex. 1-1 composition) were then coated with a 2-3mm layer of liquid silicone rubber (LSR) and cured at 120 °C for 15 minutes.

Several examples of the adhesion mediator which may be utilised herein were prepared and their compositions are disclosed in Tables 1a and 1b below:

**Table 1a: Adhesion mediator composition (wt. %) for Ex. 1-1 to 1-4**

| | Ex. 1-1 | Ex. 1-2 | Ex. 1-3 | Ex. 1-4 |
|---|---|---|---|---|
| Vinyltriethoxysilane | 32.18 | 0 | 0 | 32.27 |
| Allyltriethoxysilane | 0 | 32.18 | 0 | 0 |
| Hexenyltriethoxysilane | 0 | 0 | 31.70 | 0 |
| Karstedt's catalyst | 0.65 | 0.65 | 0.65 | 0.65 |
| Tetra-tert-butyltitanate | 5.33 | 5.33 | 5.37 | 5.35 |
| Tetraethoxysilane | 11.17 | 11.17 | 11.25 | 0 |
| Tetrapropoxysilane | 0 | 0 | 0 | 10.91 |
| Polymer 1 | 50.67 | 50.67 | 51.04 | 50.82 |

Polymer 1 was a vinyldimethyl terminated polydimethylsiloxane having a viscosity of approximately viscosity of 450 mPa.s at 25°C and a vinyl content of 0.46 wt. % vinyl (Vi) content. The Karstedt's catalyst is provided in a polymer 1 masterbatch.

**Table lb: Adhesion mediator composition (wt. %) for Ex. 1-5 to 1-9**

| | Ex. 1-5 | Ex. 1-6 | Ex. 1-7 | Ex. 1-8 | Ex. 1-9 |
|---|---|---|---|---|---|
| Vinyltriethoxysilane | 32.18 | 32.18 | 32.18 | 32.18 | 32.01 |
| Karstedt's catalyst | 0.32 | 0.16 | 0.32 | 0.32 | 0.65 |
| Tetra*-tert*-butyltitanate | 5.33 | 5.33 | 5.33 | 5.33 | 0 |
| Tetra-n-butyltitanate | 0 | 0 | 0 | 0 | 5.85 |
| Tetraethoxysilane | 11.17 | 11.17 | 11.17 | 11.17 | 11.11 |
| Polymer 1 | 51.00 | 51.16 | 0 | 0 | 50.39 |
| Polymer 2 | 0 | 0 | 51.00 | 0 | 0 |
| Polymer 3 | 0 | 0 | 0 | 51.00 | 0 |

In Table 1b., in Ex. 1-7 and 1-8:
**Polymer 2** was a 1:1 ratio (by weight) mixture of two vinyldimethyl terminated polydimethylsiloxane having a viscosity of approximately of 450 and 2000 mPa.s at 25°C, respectively and the average vinyl content of the mixture was 0.34 wt. % vinyl (Vi). The viscosity of the mixture was 1190 mPa.s;
**Polymer 3** was a 1:1 mixture of two vinyldimethyl terminated polydimethylsiloxane having a viscosity of approximately of 450 and 9000 mPa.s at 25°C, respectively and the average vinyl content of the mixture was 0.28 wt. % Vi. The viscosity of the mixture was 2440 mPa.s; and when polymer 2 replaced polymer 1, the Karstedt's catalyst was provided in a polymer 2 masterbatch and likewise when polymer 3 replaced polymer 1, the Karstedt's catalyst was provided in a polymer 3 masterbatch.

### Working Examples

In the working examples the adhesion mediator depicted as Ex. 1-9 in Table 1b was utilised to assess its ability to assist in the adherence of LSR 1 (Silastic^{™} 3D 3335 LSR) to a series of inorganic substrates. Silastic^{™} 3D 3335 LSR is commercially available from Dow Silicones Corporation of Midland Michigan, USA.

The substrates used were several commercial test plates purchased from Rocholl GmbH of Eschelbronn, Germany.

The test plate substrates utilised including their dimensions were Glass (60 x 25 x 4 mm³); 6061 T6 alloy Aluminum (60 x 25 x 2 mm³); SF-Cu F24 Copper (60 x 25 x 1 mm³); DX51 D + Z275 hot-galvanized steel (60 x 25 x 1 mm³) and DC04 Steel (60 x 25 x 1 mm³)

The different inorganic substrates were first cleaned with isopropanol. Typically, the isopropanol evaporated immediately but the substrates were left for about 10 minutes at room temperature to dry prior to usage.

Two test plates of each substrate were then utilised. A first test plate of each test plate was coated with a layer of adhesion mediator composition (Ex. 2-1 composition) using a pipette and then wiping the composition over the surface of the substrate to provide a continuous layer thereon. Each of the second test plates were not coated with adhesion mediator. Both the first and second test plates were then coated with a 2-3mm layer of LSR which was then cured at 120°C for 15 min cure to form a test plate composite. The resulting test plate composites were stored for at least 24 hours before being tested for adhesion. Each composite test plate was qualitatively tested by trying to pull the LSR away from the test plate by hand.

**Table 2 Adhesion of liquid silicone rubber to inorganic Test Plate with and without the adhesion mediator composition applied onto the test plate surface.**

| Test Plate | Adhesion after adhesion mediator applied | Adhesion with no adhesion mediator applied |
|---|---|---|
| Glass | Good | Poor |
| Aluminium | Good | Poor |
| Copper | Good | Poor |
| Galvanised Steel | Good | Poor |
| Steel | Good | Poor |

In each case it was found that the silicone rubber layer was not separable from the test plate in instances where the adhesion mediator had been applied onto the test plate surface (identified as "good" in Table 2) and in each case where the silicone rubber had been applied onto the test plate surface without prior treatment with adhesion mediator the adhesion proved "poor" meaning the silicone rubber layer was easily peeled off the test plate surface.

## Claims

1. A method for the preparation of a composite of silicone elastomer and an inorganic substrate, comprising the steps of
(a) optionally cleaning and/or activating an inorganic substrate surface;
(b) treating the optionally cleaned and/or activated inorganic substrate surface with an adhesion mediator composition;
(c) applying a hydrosilylation curable silicone rubber composition on to a treated surface resulting from step (b);
(d) curing said hydrosilylation curable silicone rubber composition,
**characterised in that** the adhesion mediator composition comprises:
(i) a trialkoxysilane, of the formula Si(OR)₃R¹ wherein each R may be the same or different and is an alkyl group having at least two carbons per group and each R¹ may be the same or different and is an unsaturated group selected from an alkenyl group or an alkynyl group; which trialkoxysilane is present in an amount of from 20 to 45 wt. % of the adhesion mediator composition;
(ii) a platinum group metal based hydrosilylation reaction catalyst in which platinum group metal is present in an amount of from 0.1-1.5 wt. % of the adhesion mediator composition;
(iii) an alkoxy titanium compound having from 2 to 4 alkoxy groups in an amount of from 1 to 10 wt. % of the adhesion mediator composition;
(iv) a tetraalkoxysilane of the formula Si(OR²)₄, wherein each R² may be the same or different and is an alkyl group having at least two carbons per group, which tetraalkoxysilane in an amount of from 5 to 20 wt. % of the adhesion mediator composition; and
(v) either
(a') a polyorganosiloxane containing at least two unsaturated groups, selected from alkenyl groups and alkynyl groups, per molecule and having a viscosity in a range of 50 mPa.s to 9000 mPa.s using a Brookfield^{™} viscometer with an RV-4 Spindle at 20 rpm at 25°C; or
(b') a mixture of two or more polyorganosiloxanes containing at least two unsaturated groups, selected from alkenyl groups and alkynyl groups, per molecule, which mixture has a viscosity in a range of 50 mPa.s to 9000 mPa.s using a Brookfield^{™} viscometer with an RV-4 Spindle at 20 rpm at 25°C;
wherein component (v) is present in an amount of from 25 to 60 wt. % of the adhesion mediator composition.

2. A method for the preparation of a composite of silicone elastomer and an inorganic substrate in accordance with claim 1 wherein the inorganic substrate surface is cleaned and/or activated by one of plasma treatment, corona discharge treatment, UV-C/ozone or Vacuum-UV irradiation, flame-pyrolytic deposition of amorphous silicon dioxide, or flame treatment.

3. A method for the preparation of a composite of silicone elastomer and an inorganic substrate in accordance with claim 1 wherein step (c) and/or (d) involves injection molding or 3-D printing.

4. A method for the preparation of a composite of silicone elastomer and an inorganic substrate in accordance with any preceding claim wherein when the inorganic substrate is selected from metal, metal alloys, glass or ceramics materials.

5. A method for the preparation of a composite of silicone elastomer and an inorganic substrate in accordance with any preceding claim wherein Component (i) of the adhesion mediator composition has the formula Si(OR)₃R¹ in which each R may be the same or different and is selected from ethyl, propyl, n-butyl isobutyl or t-butyl, and each R¹ is an alkenyl group which may be the same or different selected from vinyl, propenyl, n-butenyl, pentenyl or hexenyl.

6. A method for the preparation of a composite of silicone elastomer and an inorganic substrate in accordance with any preceding claim wherein component (ii) of the adhesion mediator composition is one or more co-ordination compounds of platinum.

7. A method for the preparation of a composite of silicone elastomer and an inorganic substrate in accordance with any preceding claim wherein component (iii) is one or more alkoxy titanium compound of the formula Ti(OR³)₄, Ti(OR³)₃R⁴, Ti(OR³)₂R⁴₂ or a chelated alkoxy titanium molecule where R³ is a linear or branched alkyl group having from 1 to 20 carbons, and when present R⁴ is an organic group such as an alkyl group having from 1 to 10 carbon atoms, an alkenyl group having from 2 to 10 carbon atoms, an alkynyl group having from 2 to 10 carbon atoms, a cycloalkyl group having from 3 to 10 carbon atoms, or an aromatic group having from 6 to 20 carbon atoms or a mixture thereof.

8. A method for the preparation of a composite of silicone elastomer and an inorganic substrate in accordance with claim 7 wherein component (iii) is selected from titanates of the structure Ti(OR³)₄, Ti(OR³)₃R⁴, Ti(OR³)₂R⁴₂ wherein each R³ is an isobutyl group, a tertiary butyl group or n-butyl group or component (iii) is an ester of titanic acid and the enolate of acetoacetic ester.

9. A method for the preparation of a composite of silicone elastomer and an inorganic substrate in accordance with any preceding claim wherein Component (iv) is a tetraalkoxysilane of the formula Si(OR²)₄ wherein each R² is selected from ethyl, propyl, isopropyl, n-butyl, isobutyl, t-butyl, pentyl or hexyl.

10. A method for the preparation of a composite of silicone elastomer and an inorganic substrate in accordance with any preceding claim wherein the hydrosilylation curable silicone rubber composition is applied in step (c) before the layer adhesion mediator applied in step (b) cures or solidifies.

11. A composite article or part obtained or obtainable from a method in accordance with any one of claims 1 to 10.

12. A composite article or part in accordance with claim 11 which contains a maximum of 50mg of platinum per kg.

13. Use of a composite article or part in accordance with claims 11 or 12 wherein the silicone elastomer and inorganic composite is used in transportation, packaging, storage, treatment, production, preparation, processing and consumption applications and/or in the molding of household products and/or food and drink products for human consumption.

14. Use of an adhesion mediator composition comprising
(i) a trialkoxysilane, of the formula Si(OR)₃R¹ wherein each R may be the same or different and is an alkyl group having at least two carbons per group and each R¹ may be the same or different and is an unsaturated group selected from an alkenyl group or an alkynyl group; which trialkoxysilane is present in an amount of from 20 to 45 wt. % of the adhesion mediator composition;
(ii) a platinum group metal based hydrosilylation reaction catalyst in which platinum group metal is present in an amount of from 0.1-1.5 wt. % of the adhesion mediator composition;
(iii) an alkoxy titanium compound having from 2 to 4 alkoxy groups in an amount of from 1 to 10 wt. % of the adhesion mediator composition;
(iv) a tetraalkoxysilane of the formula Si(OR²)₄, wherein each R² may be the same or different and is an alkyl group having at least two carbons per group, which tetraalkoxysilane in an amount of from 5 to 20 wt. % of the adhesion mediator composition; and
(v) either
(a') a polyorganosiloxane containing at least two unsaturated groups, selected from alkenyl groups and alkynyl groups, per molecule and having a viscosity in a range of 50 mPa.s to 9000 mPa.s using a Brookfield^{™} viscometer with an RV-4 Spindle at 20 rpm at 25°C; or
(b') a mixture of two or more polyorganosiloxanes containing at least two unsaturated groups, selected from alkenyl groups and alkynyl groups, per molecule, which mixture has a viscosity in a range of 50 mPa.s to 9000 mPa.s using a Brookfield^{™} viscometer with an RV-4 Spindle at 20 rpm at 25°C;
wherein component (v) is present in an amount of from 25 to 60 wt. % of the adhesion mediator composition;
in a method for the preparation of a composite of silicone elastomer and an inorganic substrate in accordance with any one of claims 1 to 10.

15. A use in accordance with claim 14 wherein the silicone elastomer and inorganic composite is used in the transport, packaging, storage, treatment, production, preparation, processing, consumption, and molding of household products and/or food and drink products for human consumption.

## Patentansprüche

1. Verfahren für die Herstellung eines Verbundwerkstoffs aus Silikonelastomer und einem anorganischen Substrat, umfassend die Schritte
(a) optional Reinigen und/oder Aktivieren einer anorganischen Substratoberfläche;
(b) Behandeln der optional gereinigten und/oder aktivierten anorganischen Substratoberfläche mit einer Haftvermittlerzusammensetzung;
(c) Aufbringen einer Silikonkautschukzusammensetzung, die durch Hydrosilylierung härtbar ist, auf eine behandelte Oberfläche, die aus Schritt (b) resultiert;
(d) Härten der Silikonkautschukzusammensetzung, die durch Hydrosilylierung härtbar ist,
**dadurch gekennzeichnet, dass** die Haftvermittlerzusammensetzung umfasst:
(i) ein Trialkoxysilan der Formel Si(OR)₃R¹, wobei jedes R gleich oder verschieden sein kann und eine Alkylgruppe ist, die mindestens zwei Kohlenstoffe pro Gruppe aufweist und jedes R¹ gleich oder verschieden sein kann und eine ungesättigte Gruppe ist, die aus einer Alkenylgruppe oder einer Alkinylgruppe ausgewählt ist; wobei das Trialkoxysilan in einer Menge von 20 bis 45 Gew.-% der Haftvermittlerzusammensetzung vorhanden ist;
(ii) einen Hydrosilylierungsreaktionskatalysator auf Platingruppenmetallbasis, in dem das Platingruppenmetall in einer Menge von 0,1-1,5 Gew.-% der Haftvermittlerzusammensetzung vorhanden ist;
(iii) eine Alkoxytitanverbindung, die von 2 bis 4 Alkoxygruppen in einer Menge von 1 bis 10 Gew.-% der Haftvermittlerzusammensetzung aufweist;
(iv) ein Tetraalkoxysilan der Formel Si(OR²)₄, wobei jedes R² gleich oder verschieden sein kann und eine Alkylgruppe ist, die mindestens zwei Kohlenstoffe pro Gruppe aufweist, wobei das Tetraalkoxysilan in einer Menge von 5 bis 20 Gew.-% der Haftvermittlerzusammensetzung vorhanden ist; und
(v) entweder
(a') ein Polyorganosiloxan, das mindestens zwei ungesättigte Gruppen, die aus Alkenylgruppen und Alkinylgruppen ausgewählt sind, pro Molekül enthält und eine Viskosität in einem Bereich von 50 mPa.s bis 9000 mPa.s unter Verwendung eines Brookfield^{™}-Viskosimeters mit einer RV-4-Spindel bei 20 U/min und 25 °C aufweist; oder
(b') eine Mischung aus zwei oder mehreren Polyorganosiloxanen, die mindestens zwei ungesättigte Gruppen, die aus Alkenylgruppen und Alkinylgruppen ausgewählt sind, pro Molekül enthalten, wobei die Mischung eine Viskosität in einem Bereich von 50 mPa.s bis 9000 mPa.s unter Verwendung eines Brookfield^{™}-Viskosimeters mit einer RV-4-Spindel bei 20 U/min bei 25 °C aufweist;
wobei Komponente (v) in einer Menge von 25 bis 60 Gew.-% der Haftvermittlerzusammensetzung vorhanden ist.

2. Verfahren für die Herstellung eines Verbundwerkstoffs aus Silikonelastomer und einem anorganischen Substrat nach Anspruch 1, wobei die anorganische Substratoberfläche durch eines von Plasmabehandlung, Koronaentladungsbehandlung, UV-C/Ozon- oder Vakuum-UV-Bestrahlung, flammenpyrolytischer Abscheidung von amorphem Siliziumdioxid oder Flammenbehandlung gereinigt und/oder aktiviert wird.

3. Verfahren für die Herstellung eines Verbundwerkstoffs aus Silikonelastomer und einem anorganischen Substrat nach Anspruch 1, wobei Schritt (c) und/oder (d) Spritzgießen oder 3D-Drucken involviert.

4. Verfahren für die Herstellung eines Verbundwerkstoffs aus Silikonelastomer und einem anorganischen Substrat nach einem vorstehenden Anspruch, wobei, wenn das anorganische Substrat aus Metall, Metalllegierungen, Glas oder Keramikmaterialien ausgewählt ist.

5. Verfahren für die Herstellung eines Verbundwerkstoffs aus Silikonelastomer und einem anorganischen Substrat nach einem vorstehenden Anspruch, wobei Komponente (i) der Haftvermittlerzusammensetzung die Formel Si(OR)₃R¹ aufweist, in der jedes R gleich oder verschieden sein kann und aus Ethyl, Propyl, n-Butyl, Isobutyl oder t-Butyl ausgewählt ist, und jedes R¹ eine Alkenylgruppe ist, die gleich oder verschieden sein kann und aus Vinyl, Propenyl, n-Butenyl, Pentenyl oder Hexenyl ausgewählt ist.

6. Verfahren für die Herstellung eines Verbundwerkstoffs aus Silikonelastomer und einem anorganischen Substrat nach einem vorstehenden Anspruch, wobei Komponente (ii) der Haftvermittlerzusammensetzung eine oder mehrere Koordinationsverbindungen von Platin ist.

7. Verfahren für die Herstellung eines Verbundwerkstoffs aus Silikonelastomer und einem anorganischen Substrat nach einem vorstehenden Anspruch, wobei Komponente (iii) eine oder mehrere Alkoxytitanverbindungen der Formel Ti(OR³)₄, Ti(OR³)₃R⁴, Ti(OR³)₂R⁴₂ oder ein chelatisiertes Alkoxytitanmolekül ist, wobei R³ eine lineare oder verzweigte Alkylgruppe ist, die 1 bis 20 Kohlenstoffatome aufweist, und wenn vorhanden, R⁴ eine organische Gruppe wie eine Alkylgruppe, die 1 bis 10 Kohlenstoffatome aufweist, eine Alkenylgruppe, die 2 bis 10 Kohlenstoffatome aufweist, eine Alkinylgruppe, die 2 bis 10 Kohlenstoffatome aufweist, eine Cycloalkylgruppe, die 3 bis 10 Kohlenstoffatome aufweist, oder eine aromatische Gruppe, die 6 bis 20 Kohlenstoffatome aufweist, oder eine Mischung davon ist.

8. Verfahren für die Herstellung eines Verbundwerkstoffs aus Silikonelastomer und einem anorganischen Substrat nach Anspruch 7, wobei Komponente (iii) aus Titanaten der Struktur Ti(OR³)₄, Ti(OR³)₃R⁴, Ti(OR³)₂R⁴₂ ausgewählt ist, wobei jedes R³ eine Isobutylgruppe, eine tertiäre Butylgruppe oder n-Butylgruppe ist oder Komponente (iii) ein Ester von Titansäure und das Enolat von Acetessigester ist.

9. Verfahren für die Herstellung eines Verbundwerkstoffs aus Silikonelastomer und einem anorganischen Substrat nach einem der vorstehenden Ansprüche, wobei Komponente (iv) ein Tetraalkoxysilan der Formel Si(OR²)₄ ist, wobei jedes R² aus Ethyl, Propyl, Isopropyl, n-Butyl, Isobutyl, t-Butyl, Pentyl oder Hexyl ausgewählt ist.

10. Verfahren für die Herstellung eines Verbundwerkstoffs aus Silikonelastomer und einem anorganischen Substrat nach einem der vorstehenden Ansprüche, wobei die Silikonkautschukzusammensetzung, die durch Hydrosilylierung härtbar ist, in Schritt (c) aufgetragen wird, bevor der Schichthaftvermittler, der in Schritt (b) aufgetragen wird, härtet oder sich verfestigt.

11. Verbundwerkstofferzeugnis oder -teil, das von einem Verfahren nach einem der Ansprüche 1 bis 10 erhalten wird oder erhältlich ist.

12. Verbundwerkstofferzeugnis oder -teil nach Anspruch 11, das ein Maximum 50 mg Platin pro kg enthält.

13. Verwendung eines Verbundwerkstofferzeugnisses oder -teils nach Anspruch 11 oder 12, wobei das Silikonelastomer und der anorganische Verbundwerkstoff für Transport, Verpackung, Lagerung, Behandlung, Produktion, Zubereitung, Verarbeitung und Verzehranwendungen und/oder bei der Formgebung von Haushaltsprodukten und/oder Lebensmittel- und Getränkeprodukten für einen menschlichen Verzehr verwendet werden.

14. Verwendung einer Haftvermittlerzusammensetzung, umfassend
(i) ein Trialkoxysilan der Formel Si(OR)₃R¹, wobei jedes R gleich oder verschieden sein kann und eine Alkylgruppe ist, die mindestens zwei Kohlenstoffe pro Gruppe aufweist und jedes R¹ gleich oder verschieden sein kann und eine ungesättigte Gruppe ist, die aus einer Alkenylgruppe oder einer Alkinylgruppe ausgewählt ist; wobei das Trialkoxysilan in einer Menge von 20 bis 45 Gew.-% der Haftvermittlerzusammensetzung vorhanden ist;
(ii) einen Hydrosilylierungsreaktionskatalysator auf Platingruppenmetallbasis, in dem das Platingruppenmetall in einer Menge von 0,1-1,5 Gew.-% der Haftvermittlerzusammensetzung vorhanden ist;
(iii) eine Alkoxytitanverbindung, die von 2 bis 4 Alkoxygruppen in einer Menge von 1 bis 10 Gew.-% der Haftvermittlerzusammensetzung aufweist;
(iv) ein Tetraalkoxysilan der Formel Si(OR²)₄, wobei jedes R² gleich oder verschieden sein kann und eine Alkylgruppe ist, die mindestens zwei Kohlenstoffe pro Gruppe aufweist, wobei das Tetraalkoxysilan in einer Menge von 5 bis 20 Gew.-% der Haftvermittlerzusammensetzung vorhanden ist; und
(v) entweder
(a') ein Polyorganosiloxan, das mindestens zwei ungesättigte Gruppen, die aus Alkenylgruppen und Alkinylgruppen ausgewählt sind, pro Molekül enthält und eine Viskosität in einem Bereich von 50 mPa.s bis 9000 mPa.s unter Verwendung eines Brookfield^{™}-Viskosimeters mit einer RV-4-Spindel bei 20 U/min und 25 °C aufweist; oder
(b') eine Mischung aus zwei oder mehreren Polyorganosiloxanen, die mindestens zwei ungesättigte Gruppen, die aus Alkenylgruppen und Alkinylgruppen ausgewählt sind, pro Molekül enthalten, wobei die Mischung eine Viskosität in einem Bereich von 50 mPa.s bis 9000 mPa.s unter Verwendung eines Brookfield^{™}-Viskosimeters mit einer RV-4-Spindel bei 20 U/min bei 25 °C aufweist;
wobei Komponente (v) in einer Menge von 25 bis 60 Gew.-% der Haftvermittlerzusammensetzung vorhanden ist;
in einem Verfahren für die Herstellung eines Verbundwerkstoffs aus Silikonelastomer und einem anorganischen Substrat nach einem der Ansprüche 1 bis 10.

15. Verwendung nach Anspruch 14, wobei das Silikonelastomer und der anorganische Verbundwerkstoff für den Transport, die Verpackung, die Lagerung, die Behandlung, die Produktion, die Zubereitung, die Verarbeitung, den Verzehr und die Formgebung von Haushaltsprodukten und/oder Lebensmittel- und Getränkeprodukten für einen menschlichen Verzehr verwendet werden.

## Revendications

1. Procédé destiné à la préparation d'un composite d'élastomère de silicone et de substrat inorganique, comprenant les étapes consistant à
(a) éventuellement nettoyer et/ou activer une surface de substrat inorganique ;
(b) traiter la surface de substrat inorganique éventuellement nettoyée et/ou activée avec une composition de médiateur d'adhésion ;
(c) appliquer une composition de caoutchouc de silicone durcissable par hydrosilylation sur une surface traitée résultant de l'étape (b) ;
(d) durcir ladite composition de caoutchouc de silicone durcissable par hydrosilylation,
**caractérisé en ce que** la composition de médiateur d'adhésion comprend :
(i) un trialcoxysilane, de la formule Si(OR)₃R¹, dans laquelle chaque R peut être identique ou différent et est un groupe alkyle ayant au moins deux carbones par groupe et chaque R¹ peut être identique ou différent et est un groupe insaturé choisi parmi un groupe alcényle ou un groupe alcynyle ; lequel trialcoxysilane est présent en une quantité allant de 20 à 45 % en poids de la composition de médiateur d'adhésion ;
(ii) un catalyseur de réaction d'hydrosilylation à base de métal de groupe de platine dans lequel le métal de groupe de platine est présent en une quantité allant de 0,1 à 1,5 % en poids de la composition de médiateur d'adhésion ;
(iii) un composé alcoxy-titane ayant de 2 à 4 groupes alcoxy en une quantité allant de 1 à 10 % en poids de la composition de médiateur d'adhésion ;
(iv) un tétra-alcoxysilane de la formule Si(OR²)₄, dans lequel chaque R² peut être identique ou différent et est un groupe alkyle ayant au moins deux carbones par groupe, lequel tétra-alcoxysilane étant en une quantité allant de 5 à 20 % en poids de la composition de médiateur d'adhésion ; et
(v) soit
(a') un polyorganosiloxane contenant au moins deux groupes insaturés, choisis parmi des groupes alcényle et des groupes alcynyle, par molécule et ayant une viscosité dans une plage de 50 mPa.s à 9000 mPa.s à l'aide d'un viscosimètre Brookfield^{™} avec un mobile cylindrique RV-4 à 20 tr/min à 25 °C ; ou
(b') un mélange de deux polyorganosiloxanes ou plus contenant au moins deux groupes insaturés, choisis parmi des groupes alcényle et des groupes alcynyle, par molécule, ce mélange ayant une viscosité dans une plage de 50 mPa.s à 9000 mPa.s à l'aide d'un viscosimètre Brookfield^{™} avec un mobile cylindrique RV-4 à 20 tr/min à 25 °C ;
dans lequel ledit composant (v) est présent en une quantité allant de 25 à 60 % en poids de la composition de médiateur d'adhésion.

2. Procédé destiné à la préparation d'un composite d'élastomère de silicone et de thermoplastique, selon la revendication 1 dans lequel la surface de substrat inorganique est nettoyé et/ou activé par l'un parmi un traitement au plasma, un traitement de décharge par effet corona, une irradiation UV-C/ozone ou UV sous vide, un dépôt pyrolytique à la flamme de dioxyde de silicium amorphe ou un traitement à la flamme.

3. Procédé destiné à la préparation d'un composite d'élastomère de silicone et de substrat inorganique selon la revendication 1, dans lequel l'étape (c) et/ou (d) implique un moulage par injection ou une impression en 3D.

4. Procédé destiné à la préparation d'un composite d'élastomère de silicone et d'un substrat inorganique selon l'une quelconque revendication précédente, dans lequel le substrat inorganique est choisi parmi métal, alliages métalliques, verre ou matériaux céramiques.

5. Procédé destiné à la préparation d'un composite d'élastomère de silicone et d'un substrat inorganique selon l'une quelconque revendication précédente, dans lequel le Composant (i) de la composition de médiateur d'adhésion a la formule Si(OR)₃R¹ dans laquelle chaque R peut être identique ou différent et est choisi parmi éthyle, propyle, n-butyle isobutyle ou t-butyle, et chaque R¹ est un groupe alcényle qui peut être identique ou différent choisi parmi vinyle, propényle, n-butényle, pentényle ou hexényle.

6. Procédé destiné à la préparation d'un composite d'élastomère de silicone et d'un substrat inorganique selon l'une quelconque revendication précédente, dans lequel le composant (ii) de la composition de médiateur d'adhésion est un ou plusieurs composés de coordination de platine.

7. Procédé destiné à la préparation d'un composite d'élastomère de silicone et d'un substrat inorganique selon l'une quelconque revendication précédente, dans lequel le composant (iii) est un ou plusieurs composés alcoxy-titane de la formule Ti(OR³)₄, Ti(OR³)₃R⁴, Ti(OR³)₂R⁴2 ou une molécule d'alcoxy-titane chélatée où R³ est un groupe alkyle linéaire ou ramifié ayant de 1 à 20 carbones, et lorsqu'il est présent R⁴ est un groupe organique tel qu'un groupe alkyle ayant de 1 à 10 atomes de carbone, un groupe alcényle ayant de 2 à 10 atomes de carbone, un groupe alcynyle ayant de 2 à 10 atomes de carbone, un groupe cycloalkyle ayant de 3 à 10 atomes de carbone, ou un groupe aromatique ayant de 6 à 20 atomes de carbone ou un mélange de ceux-ci.

8. Procédé destiné à la préparation d'un composite d'élastomère de silicone et d'un substrat inorganique selon la revendication 7, dans lequel le composant (iii) est choisi parmi des titanates de la structure Ti(OR³)₄, Ti(OR³)₃R⁴, Ti(OR³)₂R⁴₂, dans lequel chaque R³ est un groupe isobutyle, un groupe butyle tertiaire ou un groupe n-butyle ou le composant (iii) est un ester d'acide titanique et l'énolate d'ester acétoacétique.

9. Procédé destiné à la préparation d'un composite d'élastomère de silicone et d'un substrat inorganique selon l'une quelconque revendication précédente, dans lequel le Composant (iv) est un tétra-alcoxysilane de la formule Si(OR²)₄, dans lequel chaque R² est choisi parmi éthyle, propyle, isopropyle, n-butyle, isobutyle, t-butyle, pentyle ou hexyle.

10. Procédé destiné à la préparation d'un composite d'élastomère de silicone et d'un substrat inorganique selon l'une quelconque revendication précédente, dans lequel la composition de caoutchouc de silicone durcissable par hydrosilylation est appliquée à l'étape (c) avant que la couche de médiateur d'adhésion appliquée à l'étape (b) n'ait durci ou ne se soit solidifiée.

11. Article ou pièce composite obtenu ou pouvant être obtenu à partir d'un procédé selon l'une quelconque des revendications 1 à 10.

12. Article ou pièce composite selon la revendication 11 qui contient un maximum de 50 mg de platine par kg.

13. Utilisation d'un article ou pièce composite selon les revendications 11 ou 12, dans laquelle le composite d'élastomère et inorganique de silicone est utilisé dans le transport, le conditionnement, le stockage, le traitement, la production, la préparation, le traitement, la consommation et le moulage de produits ménagers et/ou de produits d'aliments et boissons pour consommation humaine.

14. Utilisation d'une composition de médiateur d'adhésion comprenant
(i) un trialcoxysilane, de la formule Si(OR)₃R¹, dans laquelle chaque R peut être identique ou différent et est un groupe alkyle ayant au moins deux carbones par groupe et chaque R¹ peut être identique ou différent et est un groupe insaturé choisi parmi un groupe alcényle ou un groupe alcynyle ; lequel trialcoxysilane est présent en une quantité allant de 20 à 45 % en poids de la composition de médiateur d'adhésion ;
(ii) un catalyseur de réaction d'hydrosilylation à base de métal de groupe de platine dans lequel le métal de groupe de platine est présent en une quantité allant de 0,1 à 1,5 % en poids de la composition de médiateur d'adhésion ;
(iii) un composé alcoxy-titane ayant de 2 à 4 groupes alcoxy en une quantité allant de 1 à 10 % en poids de la composition de médiateur d'adhésion ;
(iv) un tétra-alcoxysilane de la formule Si(OR²)₄, dans lequel chaque R² peut être identique ou différent et est un groupe alkyle ayant au moins deux carbones par groupe, lequel tétra-alcoxysilane étant en une quantité allant de 5 à 20 % en poids de la composition de médiateur d'adhésion ; et
(v) soit
(a') un polyorganosiloxane contenant au moins deux groupes insaturés, choisis parmi des groupes alcényle et des groupes alcynyle, par molécule et ayant une viscosité dans une plage de 50 mPa.s à 9000 mPa.s à l'aide d'un viscosimètre Brookfield^{™} avec un mobile cylindrique RV-4 à 20 tr/min à 25 °C ; ou
(b') un mélange de deux polyorganosiloxanes ou plus contenant au moins deux groupes insaturés, choisis parmi des groupes alcényle et des groupes alcynyle, par molécule, ce mélange ayant une viscosité dans une plage de 50 mPa.s à 9000 mPa.s à l'aide d'un viscosimètre Brookfield^{™} avec un mobile cylindrique RV-4 à 20 tr/min à 25 °C ;
dans laquelle le composant (v) est présent en une quantité allant de 25 à 60 % en poids de la composition de médiateur d'adhésion.
dans un procédé destiné à la préparation d'un composite d'élastomère de silicone et d'un substrat inorganique selon l'une quelconque des revendications 1 à 10.

15. Utilisation selon la revendication 14, dans laquelle le composite d'élastomère et inorganique de silicone est utilisé dans le transport, le conditionnement, le stockage, le traitement, la production, la préparation, le traitement, la consommation et le moulage de produits ménagers et/ou de produits d'aliments et boissons pour consommation humaine.
